# NEUE EUROPÄISCHE PATENTSCHRIFT

(11) **EP 2 324 218 B2**
(45) Veröffentlichungstag und Bekanntmachung des Hinweises auf die Entscheidung über den Einspruch: **12.08.2020**
(45) Hinweis auf die Patenterteilung: 06.03.2013
(21) Anmeldenummer: 09778462.3
(22) Anmeldetag: 10.09.2009
(51) Int. Cl.: F01N 3/28, F01N 13/18, F01N 13/14, B21D 17/02, B21D 39/04, B23P 11/00

(54) **VERFAHREN ZUM HERSTELLEN EINER ABGAS FÜHRENDEN VORRICHTUNG SOWIE WERKZEUG HIERFÜR**
METHOD FOR PRODUCING AN EXHAUST GAS CONDUCTING DEVICE AND TOOL THEREFOR
PROCÉDÉ DE FABRICATION D'UN DISPOSITIF D'ACHEMINEMENT DE GAZ D'ÉCHAPPEMENT ET OUTIL À CET EFFET

(30) Priorität: 10.09.2008 DE 102008046527
(43) Veröffentlichungstag der Anmeldung: 25.05.2011
(73) Patentinhaber: Faurecia Emissions Control Technologies, Germany GmbH, 86154 Augsburg (DE)
(72) Erfinder: KELLER, Stefan, 86405 Meitingen (DE); MERSCHKÖTTER, Stefan, 73733 Esslingen (DE); STEINHAUSER, Otto, 86356 Neusäss (DE); STIGLMAIR, Manfred, 86672 Thierhaupten (DE)
(74) Vertreter: Prinz & Partner mbB
(86) Internationale Anmeldenummer: PCT/EP2009/006581
(87) Internationale Veröffentlichungsnummer: WO 2010/028831

(56) Entgegenhaltungen:
- EP-A- 0 684 097
- WO-A-2009/017235
- DE-A1- 2 917 924
- DE-A1- 4 445 557
- DE-A1- 19 919 580
- DE-A1-102006 049 236
- FR-A1- 2 830 048
- JP-A- 10 314 870
- JP-A- 2002 097 944
- US-A- 5 119 551
- US-A- 5 329 698
- US-A1- 2003 167 854
- US-A1- 2004 265 191

## Beschreibung

Die Erfindung betrifft ein Verfahren zum Herstellen einer Abgas führenden Vorrichtung, insbesondere eine Abgasreinigungsvorrichtung, die ein Außengehäuse mit einem darin geklemmten Einleger hat, sowie ein entsprechendes Werkzeug.

Aus dem Stand der Technik ist es bekannt, Abgas führende Vorrichtungen, worunter insbesondere Katalysatoren und Dieselpartikelfilter fallen, in einem Außengehäuse zu klemmen. Der Einleger besteht üblicherweise aus einem spröden Keramiksubstrat, auch Monolith genannt, und einer flexiblen, ausgleichenden Lagermatte.

Aus dem Stand der Technik gemäß der WO 2008/064860 A1 ist es bekannt, zur Arretierung benachbarter Substrate in den segmentartigen Druckbacken eines Werkzeugs punktuelle Fortsätze vorzusehen, die das Außengehäuse abschnittsweise eindrücken und das Substrat klemmen. Die Innenseiten der Druckbacken weisen im geschlossenen Zustand eine Innenkontur auf, die der zu erzielenden Außenkontur des Außengehäuses entspricht.

Generell ist es aber bei diesen sogenannten Shrinking-Verfahren, die mit segmentartigen, um das Außengehäuse herum verlaufenden Druckbacken arbeiten, die einwärts fahren und das Außengehäuse deformieren, ein Problem, dass sich das Außengehäuse durch diese Deformation in Axialrichtung längt. Das bedeutet, man hat gewisse Toleranzprobleme oder muss nach dem Shrinking-Vorgang axial mechanisch bearbeiten.

Aus der US 2004/0265191 A1 ist ein Verfahren zum Herstellen einer abgasführenden Vorrichtung, insbesondere einer Abgasreinigungsvorrichtung bekannt, bei der um einen Einleger herum das gesamte rohrförmige Außengehäuse zusammengepresst wird. Damit soll der Einleger im deformierten Außengehäuse geklemmt werden. Es entsteht dadurch eine singuläre, axial sehr breite Einbuchtung im Außengehäuse.

Die EP 0 684 097 A1 beschreibt ebenfalls ein Verfahren zum Herstellen einer abgasführenden Vorrichtung, bei der ein Rohr zuerst mittels eines Hydroumformverfahrens aufgeweitet wird und dabei axial verlaufende, im Querschnitt V-förmige Quetschrinnen erhält. Über diese Quetschrinnen erfolgt dann die Reduzierung des Querschnittes, um den Einleger im Außengehäuse zu klemmen. Auf der Außenseite können auch noch Sicken oder Rippen abschnittsweise vorgesehen sein.

Aufgabe der Erfindung ist es, ein Verfahren und ein Werkzeug zur Durchführung des Verfahrens anzugeben, bei dem der Bearbeitungsprozess einfacher und genauer erfolgt.

Dies wird durch ein oben genanntes Verfahren mittels folgender Schritte gelöst:
a) Vorsehen eines Werkzeugs mit segmentartigen Backen, die einwärts gegen das Außengehäuse verfahrbar sind,
b) Vorsehen einer Einbuchtung an der Innenseite jeder Backe, wobei Einbuchtungen sämtlicher Backen so zueinander ausgerichtet sind, dass sich eine umlaufende Einbuchtung ergibt,
c) Einbringen des Außengehäuses und des darin eingebrachten Einlegers in das Werkzeug,
d) Deformieren des Außengehäuses durch Zufahren der Backen, um den Einleger im Außengehäuse zu klemmen und Positionieren des Außengehäuses im Werkzeug zwischen zwei axialen Anschlägen, bevor die Backen einwärts bewegt werden, und
e) Erzeugen eines umlaufenden Vorsprungs am Außenmantel entfernt von dessen Enden beim Zufahren der Backen, wobei das Außengehäuse nach dem Umformen an den Anschlägen anliegt.

Durch die Erzeugung eines umlaufenden Vorsprungs wird der Außenmantel in Axialrichtung kürzer als ohne den Vorsprung. Das "überflüssige" Material wird sozusagen in dem Vorsprung aufgenommen.

Bei der Erfindung ist kein Rollieren oder dergleichen vorgesehen, was erst eine nachträgliche Bearbeitung des Außengehäuses darstellen würde, sondern beim Klemmvorgang selbst, d.h. beim Shrinken, wird der Vorsprung erzeugt.

Zur Erhöhung der Stabilität des Außengehäuses wird insbesondere ein Vorsprung erzeugt. Dieser wird im Hinblick auf die Stabilität sogar einer Einbuchtung vorgezogen. Das bedeutet, beim Shrinken weicht das Material in die Einbuchtungen der Backen aus.

Zur exakten Einstellung der axialen Länge liegt das Außengehäuse im Werkzeug zwischen zwei axialen Anschlägen, bevor die Backen einwärts bewegt werden. Die Anschläge bestimmen die axiale Länge des Außengehäuses nach dem Umformen, da das Außengehäuse nach dem Umformen an den Anschlägen anliegt.

Vorzugsweise sind mehrere axial voneinander beabstandete Vorsprünge am Außenmantel vorgesehen. Es ergeben sich somit eine Art Ringe, die am Außenmantel umlaufen und diesen stabilisieren sowie für seine exakte Länge sorgen.

Die Vorsprünge haben im Querschnitt gesehen insbesondere ein bogenförmiges radiales Ende, was für die plastische Deformation einfacher ist.

Das Außengehäuse ist gemäß der bevorzugten Ausführungsform als umfangsmäßig geschlossenes Rohr ausgebildet, in welches der Einleger eingeschoben wird. Alternativ wäre natürlich auch eine Art Wickeln eines Blechstreifens möglich, der um den Einleger herumgelegt wird und nach Zufahren der Segmente an den Rändern verschweißt und geschlossen wird.

Das erfindungsgemäße Werkzeug zum Herstellen einer Abgas führenden Vorrichtung weist entsprechend ausgebildete Backen mit Einbuchtungen auf, die sich umfangsmäßig zu einer geschlossen umlaufenden Einbuchtung oder einem Vorsprung ergänzen. Ein solches Werkzeug hat vorzugsweise zwei axiale Anschläge, zwischen denen das Außengehäuse einzulegen ist und an denen das Außengehäuse nach dem Umformen anliegt.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine perspektivische Ansicht einer erfindungsgemäß hergestellten Abgas führenden Vorrichtung, vor Aufsetzen und Befestigen der trichterförmigen Ein- und Auslässe,
- Figur 2 eine Seitenansicht eines erfindungsgemäßen Werkzeugs,
- Figur 3 eine Längsschnittansicht durch das erfindungsgemäße Werkzeug, genauer gesagt durch eine obere Hälfte des Werkzeugs, und
- Figur 4 eine einzelne Backe, die beim erfindungsgemäßen Werkzeug eingesetzt wird.

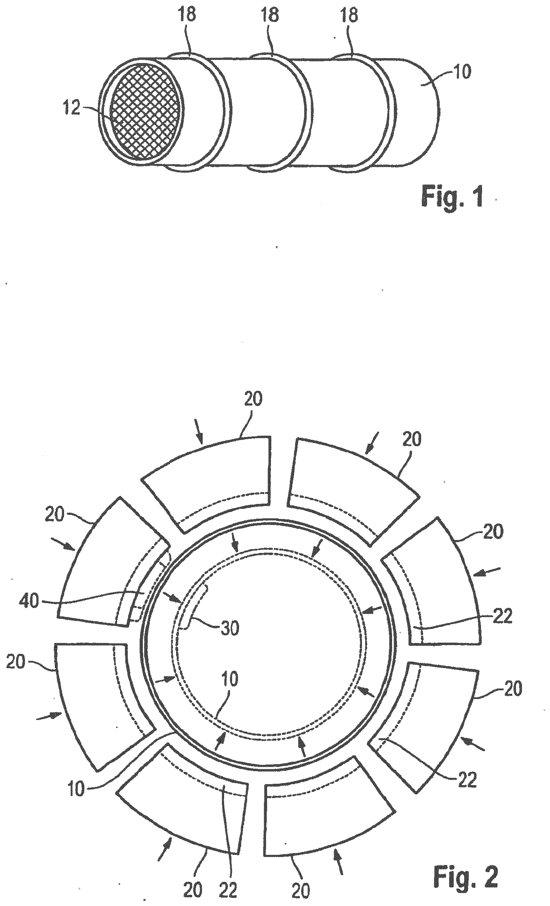

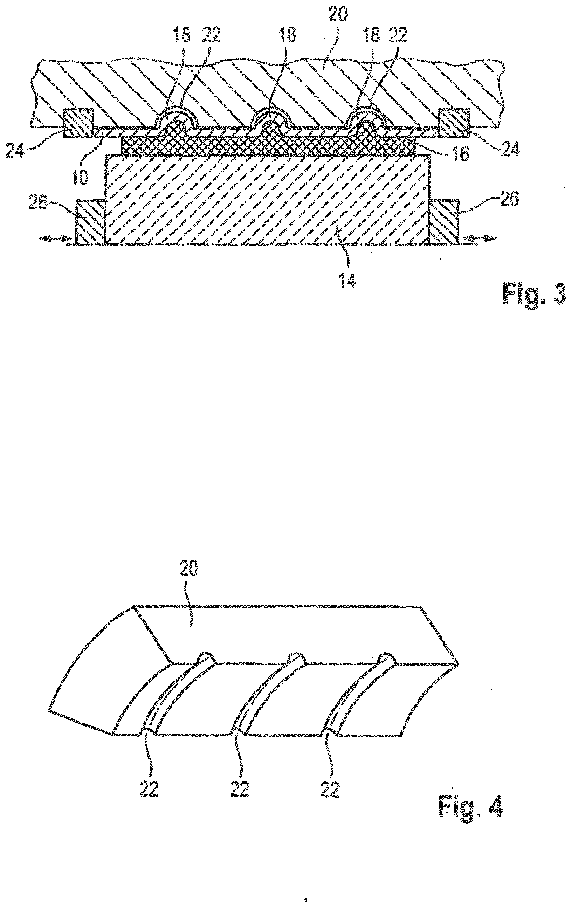

In Figur 1 ist eine erfindungsgemäß hergestellte Abgas führende Vorrichtung in Form eines Katalysators oder Dieselpartikelfilters dargestellt. Die Abgas führende Vorrichtung umfasst ein rohrförmiges Außengehäuse 10 sowie einen im Rohr geklemmten Einleger 12, der ein Substrat 14 (siehe Fig. 3) umfasst, das aus Keramik besteht und vorzugsweise katalytisch beschichtet ist, sowie eine das Substrat 14 umgebende Lagermatte 16. Das Außengehäuse 10 ist vorzugsweise ein von Haus aus geschlossenes Rohr aus Metall.

Wie in Figur 1 zu erkennen, ist das Außengehäuse 10 beabstandet von seinen axialen Enden mit mehreren umfangsmäßig geschlossen umlaufenden, ringförmigen Vorsprüngen 18 versehen, die durch Deformation des Außengehäuses 10 erzeugt werden.

In Figur 2 ist das Werkzeug dargestellt, mit dem das Außengehäuse 10 plastisch deformiert wird und der Einleger 12 im Außengehäuse 10 radial geklemmt wird. Dieses Werkzeug ist ein sogenanntes Shrinking-Werkzeug mit mehreren in Seitenansicht gesehen segmentartigen Druckbacken 20, die in Pfeilrichtung nach innen zugefahren werden können. Die Innenseiten der Druckbacken weisen im geschlossenen Zustand eine Innenkontur auf, die der zu erzielenden Außenkontur des Außengehäuses 10 entspricht. Eine dieser Backen 20 ist in Figur 4 dargestellt. Die Backe ist, wie die übrigen, länglich und erstreckt sich über das Außengehäuse 10 in axialer Richtung hinaus, ist also länger als dieses.

Wie in den Figuren 2 bis 4 zu sehen ist, haben die Backen 20 auf ihrer Innenseite Einbuchtungen 22.

Diese Einbuchtungen 22 ergänzen sich in Umfangsrichtung. In Umfangsrichtung geht bei geschlossenem oder zugefahrenem Werkzeug eine Ausnehmung 22 einer Backe 20 in die Ausnehmung 22 der benachbarten Backen 20 über, um eine umfangsmäßig geschlossene, zumindest weitgehend geschlossene Nut zu bilden.

In Figur 3 ist zu erkennen, dass die Einbuchtungen bogenförmig an ihrer tiefsten Stelle auslaufen, d.h. einen bogenförmigen radialen Grund oder ein bogenförmig radiales Ende besitzen.

Darüber hinaus hat das Werkzeug axiale Anschläge 24 (siehe Fig. 3), die optional in den Backen 20 ausgebildet sein können oder als separate, unter Umständen zustellbare Teile ausgeführt sind.

Das Herstellungsverfahren wird im Folgenden näher erläutert.

Zuerst werden Substrat 14 und Lagermatte 16 als Einheit in das Außengehäuse 10 geschoben, und diese Einheit wird anschließend in das offene Werkzeug eingeführt. Es muss axial eine korrekte Ausrichtung von dem Einleger 12 zu dem Außengehäuse 10 vorhanden sein.

Die Einheit liegt dann zwischen den Anschlägen 24, bevorzugt liegt das Außengehäuse 10 mit seinen axialen Enden an den Anschlägen 24 sogar an. Es kann in diesem Zusammenhang aber auch sinnvoll sein, vorab einen geringen Spalt axial vorzusehen, sodass unabhängig von den axialen Längentoleranzen der verbauten Außengehäuse 10, bezogen auf den Ausgangszustand, nach der Herstellung stets dieselbe axiale Länge erzeugt wird.

Es ist auch möglich, zusätzlich das Substrat 14 mit Anschlägen 26 in seiner Lage zu fixieren. Diese Anschläge 26 können gleichförmig zum Substrat 14 bewegt werden, um es axial relativ zum Werkzeug auszurichten. Diese gleichförmige Bewegung lässt sich z.B. durch Koppelung der Anschläge 26 mittels einer gemeinsamen Spindel oder eines Scherengestänges erreichen.

Wenn die Backen 20 anschließend zugefahren werden, d.h. bei einem kreiszylindrischen Außengehäuse 10 radial nach innen zugefahren werden, wird das Außengehäuse 10 plastisch deformiert. Das Außengehäuse 10 hat durch die plastische Deformation das Bestreben, sich zu längen. Hierbei schlägt es jedoch an den Anschlägen 24 an, und das Material wandert in die Ausnehmungen 22, um die umlaufenden Vorsprünge 18 zu bilden.

Zusätzlich zu den Vorsprüngen 18 könnte das Außengehäuse 10 natürlich auch eine umlaufende Einbuchtung besitzen. Hierzu wären dann aber an den Backen 20 Vorsprünge 40 vorzusehen, die sich umfangsmäßig ergänzen. In Figur 2 ist an einer Backe 20 beispielsweise ein solcher Vorsprung 40 dargestellt, sowie eine Einbuchtung 30 im Außengehäuse 10, welches in Figur 2 mit unterbrochenen Linien im plastisch deformierten Zustand dargestellt ist.

Durch die Deformation und die umlaufenden Vorsprünge 18 erhält das Außengehäuse 10 eine deutlich bessere Stabilität. Darüber hinaus werden die axialen Toleranzen beim Shrinken sozusagen auf null reduziert, denn alle Außengehäuse können dieselbe axiale Länge haben, sie werden bei entsprechender Einstellung der Anschläge 24 stets an diesen nach der Deformation anliegen.

## Patentansprüche

1. Verfahren zum Herstellen einer Abgas führenden Vorrichtung, insbesondere einer Abgasreinigungsvorrichtung, die ein Außengehäuse (10) mit einem darin geklemmten Einleger (12) hat, mit folgenden Schritten:
a) Vorsehen eines Werkzeugs mit segmentartigen Backen (20), die einwärts gegen das Außengehäuse (10) verfahrbar sind,
b) Vorsehen einer Einbuchtung (22) an der Innenseite jeder Backe (20), wobei Einbuchtungen (22) sämtlicher Backen (20) so zueinander ausgerichtet sind, dass sich eine umlaufende Einbuchtung ergibt,
c) Einbringen des Außengehäuses (10) und des darin eingebrachten Einlegers (12) in das Werkzeug und Positionieren des Außengehäuses (10) im Werkzeug zwischen zwei axialen Anschlägen (24), bevor die Backen (20) einwärts bewegt werden,
d) Deformieren des Außengehäuses (10) durch Zufahren der Backen (20), um den Einleger (12) im Außengehäuse (10) zu klemmen, und
e) Erzeugen eines umlaufenden Vorsprungs (18) am Außenmantel (10) entfernt von dessen Enden beim Zufahren der Backen, wobei das Außengehäuse (10) nach dem Umformen an den Anschlägen (24) anliegt.

2. Verfahren nach Anspruch 1, **dadurch gekennzeichnet, dass** mehrere axial voneinander beabstandete Vorsprünge (18) am Außenmantel erzeugtwerden.

3. Verfahren nach einem der vorhergehenden Ansprüche, **dadurch gekennzeichnet, dass** der Vorsprung (18) im Querschnitt ein bogenförmiges radiales Ende haben.

4. Verfahren nach einem der vorhergehenden Ansprüche, **dadurch gekennzeichnet, dass** das Außengehäuse (10) als umfangsmäßig geschlossenes Rohr ausgebildet ist, in welches der Einleger (12) eingeschoben wird.

5. Verfahren nach einem der vorhergehenden Ansprüche, **dadurch gekennzeichnet, dass** der Einleger (12) ein Substrat (14) und eine diese umgebende, flexible Lagermatte (16) umfasst.

6. Verfahren nach einem der vorhergehenden Ansprüche, **dadurch gekennzeichnet, dass** der Einleger (12) an zumindest einer der beiden axialen Seiten durch einen Anschlag (26) in seiner Lage fixiert ist.

7. Werkzeug zum Herstellen einer Abgas führenden Vorrichtung und zum Durchführen des Verfahrens nach einem der vorhergehenden Ansprüche, das mehrere bewegliche Backen (20) hat, deren Innenseiten im geschlossenen Zustand eine Innenkontur aufweisen, die der zu erzielenden Außenkontur des Außengehäuses (10) entspricht, wobei die Backen (20) auf ihrer Innenseite und entfernt von ihren axialen Enden wenigstens eine Einbuchtung (22) haben, wobei sich die Einbuchtungen (22) umfangsmäßig an die Einbuchtungen (22) der angrenzenden Backen (20) anschließen, um eine umlaufende Einbuchtung zu erzeugen, und wobei das Werkzeug zwei axiale Anschläge (24) hat, zwischen denen das Außengehäuse (10) einzulegen ist und an denen das Außengehäuse (10) nach dem Umformen anliegt.

## Claims

1. A method of manufacturing an exhaust gas carrying device, in particular an exhaust gas purification device, which has an outer housing (10) with an insert (12) clamped therein, comprising the following steps:
a) providing a tool having segment-like jaws (20) which are adapted to be moved inwards against the outer housing (10);
b) providing an indentation (22) on the inside of each jaw (20), with indentations (22) of all jaws (20) being oriented in relation to each other such that a continuously surrounding indentation is obtained;
c) placing the outer housing (10) and the insert (12) placed therein into the tool and positioning the outer housing (10) in the tool between two axial stops (24) before the jaws (20) are moved inwards;
d) deforming the outer housing (10) by closing the jaws (20) to clamp the insert (12) in the outer housing (10); and
e) producing a surrounding projection (18) on the outer jacket (10) remote from the ends thereof when closing the jaws, the outer housing (10) resting against the stops (24) after the reshaping process.

2. The method according to claim 1, **characterized in that** a plurality of axially spaced projections (18) are produced on the outer jacket.

3. The method according to either of the preceding claims, **characterized in that** the projection (18) has an arcuate radial end in cross-section.

4. The method according to any of the preceding claims, **characterized in that** the outer housing (10) is configured as a circumferentially closed tube into which the insert (12) is inserted.

5. The method according to any of the preceding claims, **characterized in that** the insert (12) comprises a substrate (14) and a flexible bearing mat (16) surrounding them.

6. The method according to any of the preceding claims, **characterized in that** the insert (12) is fixed in its position on at least one of the two axial sides by a stop (26).

7. A tool for manufacturing an exhaust gas carrying device and for carrying out the method according to any of the preceding claims, the tool having a plurality of movable jaws (20) the inner faces of which, in the closed condition, have an inner contour corresponding to the outer contour to be attained of the outer housing (10), the jaws (20) having on their inner faces and remote from their axial ends at least one indentation (22), the indentations (22) circumferentially adjoining the indentations (22) of the adjacent jaws (20) to produce a continuously surrounding indentation, and the tool having two axial stops (24) between which the outer housing (10) is to be placed and against which the outer housing (10) rests after the reshaping process.

## Revendications

1. Procédé de fabrication d'un dispositif conducteur de gaz d'échappement, en particulier d'un dispositif d'épuration de gaz d'échappement, qui comporte un boîtier extérieur (10) présentant une pièce d'insert (12) serrée dans celui-ci, comprenant les étapes suivantes :
a) prévision d'un outil à mâchoires (20) en segments qui peuvent être déplacées vers l'intérieur contre le boîtier extérieur (10),
b) prévision d'un creux (22) sur la face intérieure de chaque mâchoire (20), des creux (22) de l'ensemble des mâchoires (20) étant orientés les uns par rapport aux autres de manière à former un creux circonférentiel,
c) insertion du boîtier extérieur (10) et de la pièce d'insert (12) placée dans celui-ci dans l'outil et agencement du boîtier extérieur (10) dans l'outil entre deux butées axiales (24) avant le déplacement des mâchoires (20) vers l'intérieur,
d) déformation du boîtier extérieur (10) par la fermeture des mâchoires (20) afin de serrer la pièce d'insert (12) dans le boîtier extérieur (10), et
e) réalisation d'une saillie circonférentielle (18) sur l'enveloppe extérieure (10) à distance des extrémités de celle-ci lors de la fermeture des mâchoires, le boîtier extérieur (10) reposant sur les butées (24) après le façonnage.

2. Procédé selon la revendication 1, **caractérisé en ce que** plusieurs saillies (18) axialement espacées les unes des autres sont produites sur l'enveloppe extérieure.

3. Procédé selon l'une des revendications précédentes, **caractérisé en ce que** la saillie (18) présente en section transversale une extrémité radiale arquée.

4. Procédé selon l'une des revendications précédentes, **caractérisé en ce que** le boîtier extérieur (10) est réalisé sous forme de tuyau fermé sur la périphérie dans lequel la pièce d'insert (12) est insérée.

5. Procédé selon l'une des revendications précédentes, **caractérisé en ce que** la pièce d'insert (12) comprend un substrat (14) et une natte de montage (16) flexible qui les entoure.

6. Procédé selon l'une des revendications précédentes, **caractérisé en ce que** la pièce d'insert (12) est fixée dans sa position par une butée (26) au moins d'un des deux côtés axiaux.

7. Outil pour la fabrication d'un dispositif conducteur de gaz d'échappement et la réalisation du procédé selon l'une des revendications précédentes, présentant plusieurs mâchoires (20) mobiles dont les faces intérieures présentent à l'état fermé un contour intérieur correspondant au contour extérieur du boîtier extérieur (10) à obtenir, les mâchoires (20) présentant sur leur face intérieure et à distance de leurs extrémités axiales au moins un creux (22), les creux (22) se raccordant sur la périphérie aux creux (22) des mâchoires (20) adjacentes afin de produire un creux circonférentiel, et l'outil présentant deux butées axiales (24) entre lesquelles le boîtier extérieur (10) doit être placé et sur lesquelles le boîtier extérieur (10) repose après le façonnage.
